Europäisches Patentamt

(19) European Patent Office

Office européen des brevets

(11) Publication number : **0 462 904 A2**

(12) # EUROPEAN PATENT APPLICATION

(21) Application number : **91401675.3**

(22) Date of filing : **20.06.91**

(51) Int. Cl.⁵ : **F16H 63/16, F16H 63/08, F16D 15/00**

(30) Priority : **21.06.90 ZA 904815**

(43) Date of publication of application :
**27.12.91 Bulletin 91/52**

(84) Designated Contracting States :
**AT BE CH DE DK ES FR GB GR IT LI LU NL SE**

(71) Applicant : **TECHNOLOGY FINANCE CORPORATION (PROPRIETARY) LIMITED**
**72 Grayston Drive**
**2199 Sandton, Transvaal (ZA)**

(72) Inventor : **Stephens, John Joseph Martin**
**First Floor, Nedbank East City Building,**
**120 End Street, ZA-2094, Doornfontein (ZA)**

(74) Representative : **Beauchamps, Georges et al**
**Cabinet Z.Weinstein 20, avenue de Friedland**
**F-75008 Paris (FR)**

㉔ **Gearbox.**

㉗ The invention provides a rotatable shaft (12d,13d,14d,15d), a rotatable hub (12b,13b,14b,15b) on the shaft, locking means 30 housed within the shaft and movable between a fully extended position wherein it projects generally radially outwardly from the shaft (12d,13d,14d,15d) to engage in a recess 32 in the hub to lock the shaft and the hub (12b,13b,14b,15b) against relative rotational movement, and a retracted position wherein the locking means 30 is withdrawn from the recess 32 in the hub to permit relative rotation between the latter and the shaft, operating means within the shaft (12d,13d,14d,15d) adapted on operation to urge the locking means 30 towards the fully extended position, the arrangment being characterized in that the recess 32 in the hub (12b,13b,14b,15b) which is adapted to receive the locking means 30 is elongated in the direction of rotation of the hub and profiled to permit the locking means 30 to reach its fully extended position at any position along a substantial length of the recess 32.

FIGURE 3

EP 0 462 904 A2

THIS invention relates to a gearbox and more particularly to a method and means of selectively coupling gears, shafts or the like.

U.S. Patents Nos. 3,662.613 (INGALLS), 4,716.778 (SCARPINO), British Patents Nos. 1,509,880 (KUBOTA), 943,634 (FERREIRINHA), French Patent No. 399,516 (VIGNAL) and European Patent No. 0 333 668 (BONDIOLI) all disclose arrangements whereby a gear wheel is selectively coupled to a shaft through a bore in the latter, with pin elements or the like being urged radially outwardly from the bore to engage in apertures in the hub of the gear wheel. From a practical point of view, these arrangements are the same as a conventional dog clutch, in that engagement between the shaft and the gear wheel can only take place when these two elements rotate at the same speed. It is an object of the present invention to provide a method and means whereby engagement and disengagement can be effected notwithstanding different rotational speeds between the shaft and the gear wheel.

According to the invention coupling means in accordance with the invention comprises a rotatable shaft, a rotatable hub on the shaft, locking means housed within the shaft and movable between a fully extended position wherein it projects generally radially outwardly from the shaft to engage in a recess in the hub to lock the shaft and the hub against relative rotational movement, and a retracted position wherein the locking means is withdrawn from the recess in the hub to permit relative rotation between the latter and the shaft, operating means within the shaft adapted on operation to urge the locking means towards the fully extended position, the arrangement being characterised in that the recess in the hub which is adapted to receive the locking means is elongated in the direction of rotation of the hub and profiled to permit the locking means to reach its fully extended position at any position along a substantial length of the recess. Preferably the locking means will be able to reach its fully extended position at any position along the entire length of the recess.

Further according to the invention two spaced locking means are adapted to protrude into the recess in the hub, and the spacing between the locking means approximates the length of the recess so that a locking means will be disposed towards each extremity of the recess. It will be appreciated that if desirable, pairs of locking means need not engage in the same hub recess, but a separate recess could be provided for each locking means.

Still further according to the invention the operating means is in the nature of a mechanical shuttle disposed within the bore of the shaft and movable longitudinally relative thereto, the shuttle defining a cam-like profile which is adapted to engage the locking means directly, or indirectly through a follower or the like, to urge the locking means towards its fully extended position. In the arrangement described above where two locking means are provided, the shuttle is adapted to act independently on each locking means so that the locking means will operate in sequence with one or the other first moving to its fully extended position followed by the other locking means.

Further according to this aspect of the invention, the shuttle comprises two segments biased towards one another by a biasing means, so that when one segment is moved longitudinally within the bore of the shaft towards a position wherein it engages the locking means, the biasing means will act to urge the other segment also towards the position wherein it engages the other locking means. The invention envisages that the same arrangement will apply for an uncoupling arrangement wherein the shuttle moves away from the locking means. Thus in a preferred arrangement, the segments will be mounted for longitudinal movement on an axial guide and disposed one to either side of an abutment on the guide and biased from opposed sides towards the abutment, so that axial movement of the guide in one direction, will cause positive movement of one segment and spring-loaded movement of the other segment, and vice-versa for movement of the axial guide in the opposite direction.

Alternatively the operating means could be in the form of a fluid system comprising a pressure chamber within a shaft communicating with the locking means so that upon pressurisation of the chamber by a working fluid, the locking means is moved to its extended position and upon a reduction of pressure in the chamber, the locking means moves to the retracted position. With such an arrangement the locking means could include or define a piston member which is movable under the influence of the working fluid in the chamber in a cylinder defined in the shaft.

Still further according to the invention the locking means could be in the nature of a pin element, key element, or the like but will preferably be in the form of a ball or roller which is movable between a retracted position wherein it is disposed within a radial aperture passing through the wall of the shaft and a fully extended position wherein it projects from the outer surface of the shaft to be disposed between a hub contact surface at one end of the recess in the hub, and a shaft contact surface in the radial aperture in the shaft, the aforesaid contact surfaces being generally opposed. It is a feature of the invention that angles of the hub contact surface and the shaft contact surface will be such that there is a net force acting on the roller which urges the roller towards its retracted position. In addition the roller could be biased by a spring bias to its retracted position.

Further according to the invention, if desirable resilient shock reducing means is provided by the hub to reduce shock during the process of coupling the shaft to the hub. Thus in one arrangement the hub is formed of an inner and outer sleeve defining adjacent opposed abutment surfaces and resilient inserts or pads are provided between the opposed surfaces to serve a shock reducing function when the inner and outer sleeve perform relative angular movement to move the opposed abutment surfaces towards one another. Alternatively the recess in the hub defines a leading extremity and a trailing extremity, and one or both such extremities is at least partially formed of a resilient shock reducing material. In a further alternative the recess in the hub is defined in an insert in the hub and the insert is of a resilient shock reducing material. In yet a further alternative the hub includes an outer sleeve and an inner sleeve of resilient shock reducing material coupled to one another, with the recess in the hub being formed in the inner sleeve.

In order more clearly to illustrate the invention a preferred embodiment thereof is described hereunder purely by way of example with reference to the accompanying drawings wherein:

Figure 1 is a schematic partially sectioned elevation of a gear box utilising the principles of the invention;

Figure 2 is an enlarged end elevation of a gear wheel and co-axial shaft being part of the gear box in Figure 1, the gear wheel and shaft being in an uncoupled state;

Figure 3 is an end elevation of the gear wheel and shaft of Figure 2 coupled to one another in respect of relative rotation;

Figure 4 is an enlarged view of portion III in Figure 3 of locking means adapted selectively to couple the gear wheel to the shaft;

Figure 5 is an enlarged view on line V-V in Figure 3;

Figure 6 is a sectioned elevation of a shuttle-type operating means which adapted to operate the locking mechanism shown in Figures 4 and 5;

Figure 7 is an end elevation of the operating means in Figure 6;

Figure 8 is an exploded perspective view of the shuttle in Figures 6 and 7;

Figure 9 is a sectioned elevation of a variation of the operating means in Figure 6;

Figure 10 is an end elevation of the operating means in Figure 9;

Figure 11 is a schematic perspective view of a selector push/pull mechanism for the operating means in Figures 6, 7 and 8;

Figure 12 is a schematic illustration of an alternative operating means to that shown in Figure 6;

Figure 13 is a partial perspective view of the gearwheel in Figure 2 with a shock reducing feature.

Referring to the drawings, the invention provides a novel coupling mechanism for coupling a tubular shaft to a hub which is rotatably mounted thereon. The hub could be the hub of a gear wheel, or could be in the form of a coaxial second hollow shaft section whereof a portion is rotatably mounted over the aforesaid first hollow shaft. The mechanism of the invention permits the coupling of any concentrically mounted rotatable hub to the hollow shaft and it will be appreciated that such hub could be that of a simple gear wheel, or for example the hub of planetary wheels in a sun wheel or ring gear arrangement. Doubtless other variations and applications will be possible.

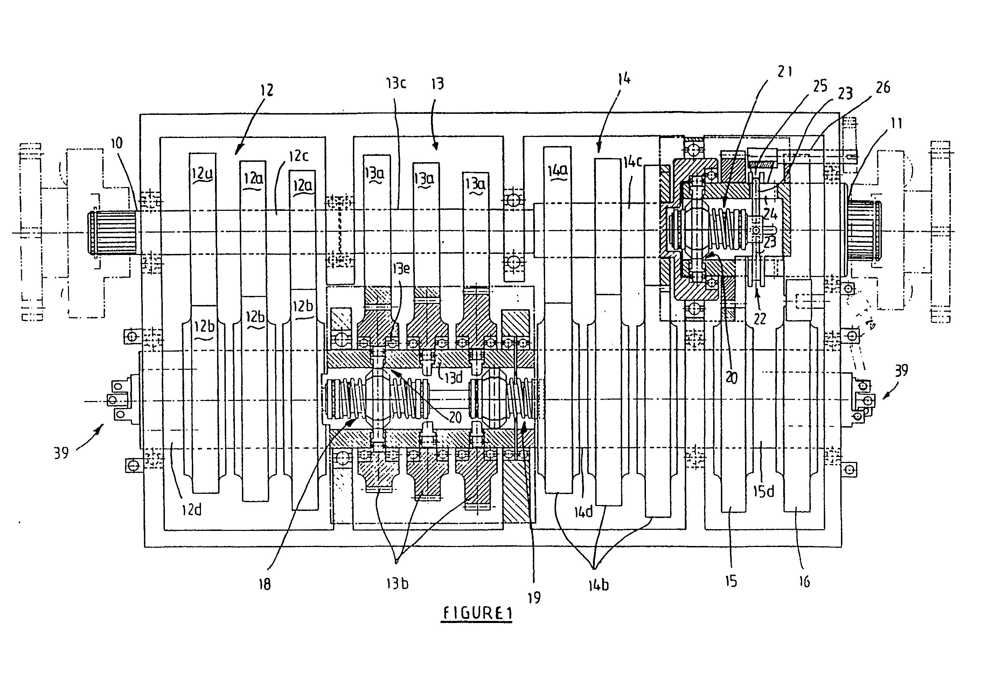

In one application the coupling mechanism of the invention permits the construction of a compact and efficient gearbox. Such a gearbox is illustrated in Figure 1 purely as an example and comprises an input shaft 10 and an output 11. The gearbox includes three gear clusters 12, 13 and 14 as well as an output drive gear 15 which couples directly with the shaft 11, and a reverse gear 16 which couples indirectly with the output shaft 11 through a reversing pinion 17. Each gear cluster 12, 13 and 14 comprises fixed gear wheels 12a, 13a and 14a respectively which are mounted on rotational shafts 12c, 13c and 14c respectively, and which mesh with gear wheels 12b, 13b and 14b respectively. The gear wheels 12b, 13b and 14b are rotatably mounted on shafts 12d, 13d and 14d on bearings such as shown at 13e, and are capable of being selectively coupled to the shafts 12d, 13d and 14d as described in more detail below. The shaft 12c which is an extension of the input shaft 10 rotates independently, while the shafts 13c and 14c are coupled to one another and are capable of selectively being coupled to the output 11 by means of a coupling shuttle 21 as described in more detail below. The shaft sections 12d and 13d are constituted as a single hollow shaft which rotates independently of the shaft sections 14d and 15d which are likewise constituted as a single hollow shaft. With the layout of the invention ninety-six forward gear ratios can be selected by selectively coupling the gear wheels to their respective shafts sections in various combinations. Nine gear ratios can be selected in reverse. Selectors for the gearbox are shown at 39 and are described in more detail below.

The coupling means of the invention is particularly suitable for a gearbox where a large number of gear ratios, each providing a small ratio-increment are required, for example for heavy haulage.

It will be appreciated that a variety of different gearbox layouts will be possible. For example the gear clusters described above could have less or more than three meshing pairs of gear wheels. It will also be possible to have arrangements wherein some of the independently rotating shaft sections could be selectively coupled to one another.

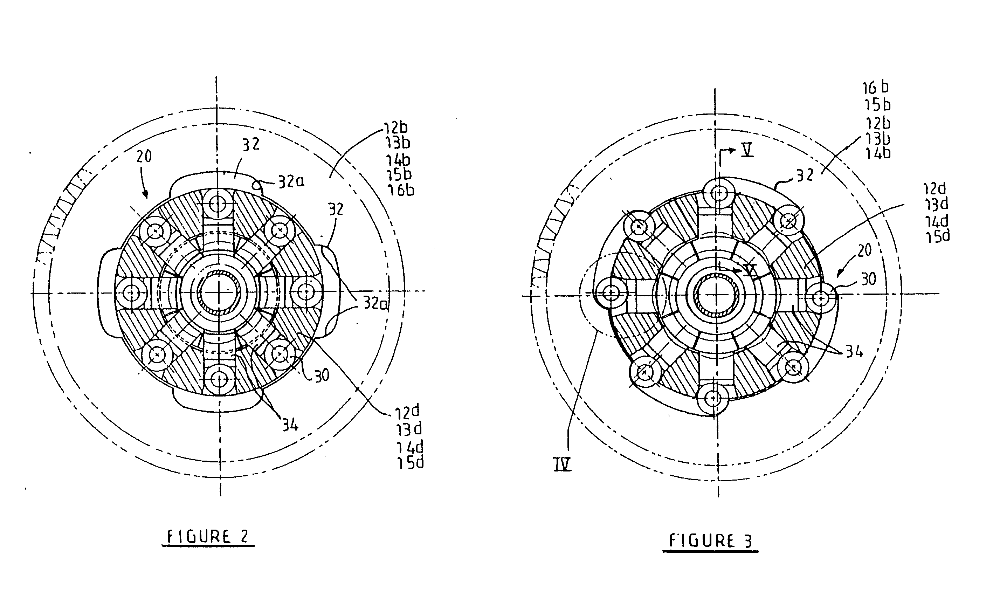

With reference to Figures 2 and 3 the coupling mechanism 20 of the invention for coupling a hub to a hollow shaft comprises a plurality of roller elements 30 which are housed in apertures 31 passing through the wall of the shaft 12d, 13d, 14dand 15d, the rollers 30 being radially movable in the apertures 31 between a retracted position wherein they are fully retracted into the apertures 31 (Figure 2) and a fully extended position wherein they project from the outer surface of the shaft and engage in a recess 32 in the hub (Figure 3), to lock the hub 12b, 13b, 14b, 15, 16, against rotation relative to the hollow shaft 12d, 13d, 14d 15d as described in more detail below.

It is a feature of the invention that the recess 32 in the hub is elongated in the direction of rotation of the hub and the shaft so that the roller element 30 can move to its fully extended position anywhere along the length of the recess 32. During the coupling operation, this feature permits a roller element 30 to move to its fully extended position and to be locked into such position prior to experiencing a radially inwardly directed force when such roller element 30 engages one of the shoulders 32a of the recess 32 at an extremity thereof. This feature thus enables a locking element 30 to move to its extended position in the coupling operation notwithstanding a difference between angular velocities in the shaft 12d, 13d 14d, 15d and hub 12b, 13b, 14b, 15, 16. The feature also permits the uninterrupted application of torque during the coupling operation.

In order to prevent backlash between the shaft and the hub as a result of the elongated recess 32, the invention enviages that the roller elements 30 will operate in pairs with one roller element 30 engaging in one extremity 32a of the recess 32 to transmit torque, while another will engage in the other extremity 32a of the recess 32 to eliminate backlash between the shaft and the hub. The extremity 32a of the recess 32 at which the torque is transmitted, will of course depend on whether the gearbox is operating in a forward or reverse mode, and whether the gears are being changed up or down. The coupling operation of gears for all the aforesaid, is essentially the same operation as described in more detail below with reference to the operating mechanism 18, 19, 21 of the coupling device.

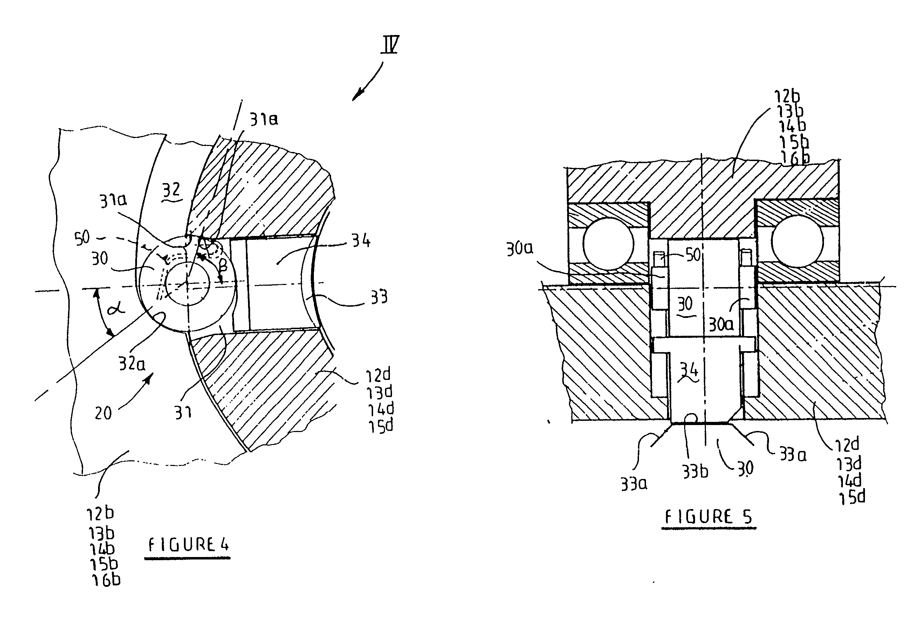

It is a feature of the invention that when the roller 30 is locked in its fully extended position and torque is transmitted between the shaft and gearwheel, a net force will act on the roller in the direction of its retracted position. For this purpose the angle of the contact surface of the shoulder 32a of the recess 32, and the angle of the contact surface 31a of the aperture 31 where the roller 30 contacts these surfaces, will be chosen such that the net resultant force on the roller element 30 will be into the aperture. Thus in Figure 4 the angle α of the contact surface 32a will be smaller than the angle β of the contact surface 31a. It has been found that with such an arrangement the uncoupling of a gearwheel 12b, 13b, 14b from a shaft 12d, 13d, 14d can be effected without extraneous biassing means acting on the roller 30. However, the invention nevertheless envisages that biassing means in the form of a spring clip 50 will be provided to bias the roller elements 30 towards their retracted positions. The spring clip 50 may be mounted in the apertures 31 and be adapted to engage co-axial shoulders 30a provided on the roller elements Figure 5. These spring clips 50 will ensure that the roller elements 30 remain in their retracted positions when the shaft and gearwheels are stationary and in other circumstances where no torque is being transmitted.

In an alternative arrangement to that shown in Figure 4 the engagement elements 30 could be in the form of elongated pin elements of a suitable cross-sectional profile, not shown. For low torque transmission, the pin elements could simply be of circular cross-section. For higher torque transmission the pin elements will preferably be of generally oval cross-section, with the major axis of the oval shape disposed parallel to the longitudinal axis of the shaft 12d, 13d, 14d, 15d. It is believed that this shape will have the effect of reducing stress in the shaft itself, in the zone of the apertures therein.

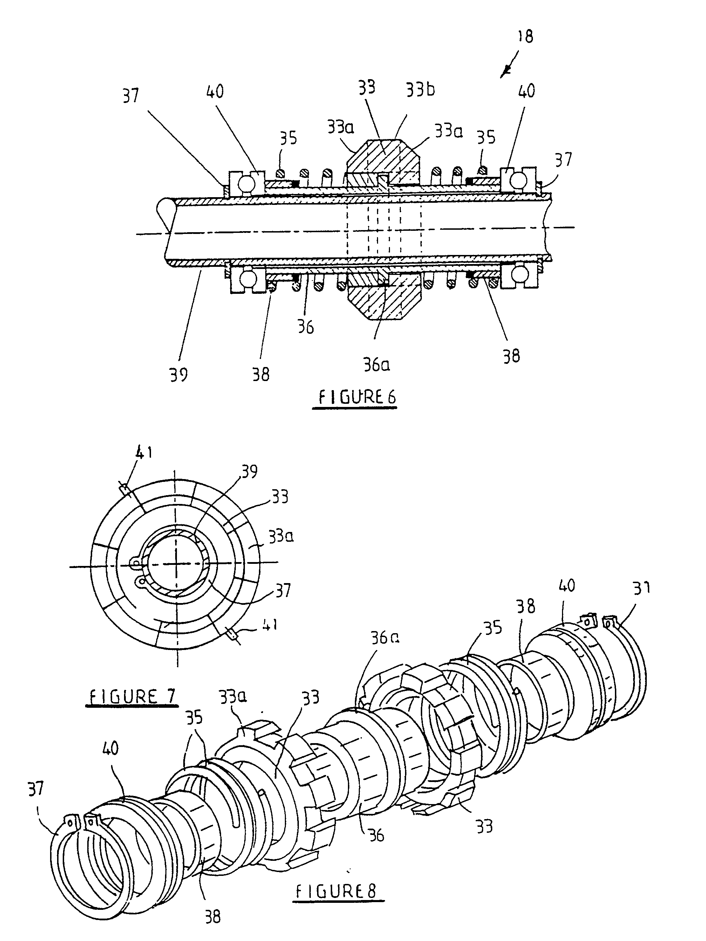

The operating mechanism 18 of the coupling device is in the nature of a shuttle 33 housed within the bore of the shaft 12d, 13d, 14d, 15d and axially movable therein. With reference to Figure 6, the shuttle 33 defines a cam shoulder 33a at one or both ends thereof, depending on whether the shuttle is single or double acting respectively, such shoulder 33a being adapted to engage the locking rollers 30 either directly (not shown), or indirectly through a follower 34, to urge the rollers 30 to their fully extended position (Figure 3), during a coupling operation. It would be appreciated that once the shuttle 33 is moved into position where the followers 34 have moved over the cam shoulder 33a onto the plateau 33b of the shuttle 33, they will effectively be locked in their fully extended positions.

During a coupling operation the locking rollers 30 of each pair which act together will be moved into the respected recesses 32 sequentially as described above. In order to move the locking rollers 30 of each pair sequentially into their fully extended position, the invention provides for the operating shuttle 33 to be divided into two inter-meshing segments designated as 33c in Figure 8. The segments operate in sequence so that the leading segment engages the first locking roller of each pair, and the trailing segment engages the second roller of each pair. In the arrangement illustrated in Figures 6, 7 and 8, the segments 33c will be biased from opposite directions by means of compression springs 35 towards a collar 36a disposed on a locating guide 36 for the segments 33c. Thus movement of the guide 36 and collar 36a in one longitudinal direction or the other will result in a positive force being exerted on the shuttle segment located toward's the leading side of the collar 36a, while the trailing segment will be spring biased to follow the movement of the leading segment. In this way the segments 33c will operate sequentially to move their respective locking rollers towards their fully extended position.

From a constructional point of view the operating mechanism illustrated in Figures 6, 7 and 8 comprises the tubular locating guide member 36 mentioned above having a central collar formation 36 a with a shuttle segment 33c being mounted to either side of the collar 36a. A compression spring 35 biases each shuttle segment 33c towards the central collar 36a, the compression springs 35 being held in position by means of a removable collar in the form of a circlip 37 at each end of the guide 36. A tubular stop formation 38 on the outer surface of the guide 36 prevents overcompression of the springs 35. The guide 36 is rotatably mounted on a tubular push/pull rod 39 by means of thrust bearings 40 disposed intermediate the ends of the guide 36 and the circlips 37. The shuttle member 33 further defines one or more outwardly projecting pin elements 41 which engage in longitudinal grooves (not shown) on the inner surface of the bore of the shaft 12d, 13d, 14d, 15d so that the shuttle 33 will rotate in conjunction with such shaft but at the same time be free to perform longitudinal movements therein for coupling purposes. In this way the segments 33c will remain aligned with their respective followers 34.

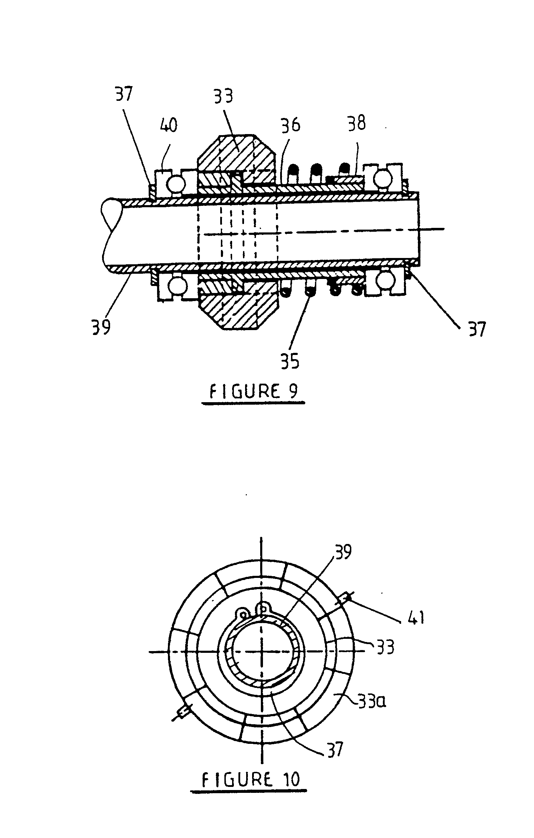

The shuttle illustrated in Figures 6, 7 and 8 is a double acting variety which in use will be disposed for example between gearwheels 12b on a shaft 12d so that longitudinal movement in one direction will couple the one gearwheel to the shaft 12d, while longitudinal movement in the other direction will couple the other gearwheel to the shaft 12d, and with an intermediate position of the shuttle coupling neither gearwheel to the shaft 12d. A single acting shuttle is shown at 19 and 21 in Figure 1, and is shown in more detail in Figures 9 and 10.

With reference to Figure 9, the shuttle illustrated is designed for movement from right to left to perform a coupling operation. It differs from the one previously described only in that only a single biassing spring 35 is provided to bias the trailing segment of the shuttle 33 during the coupling operation.

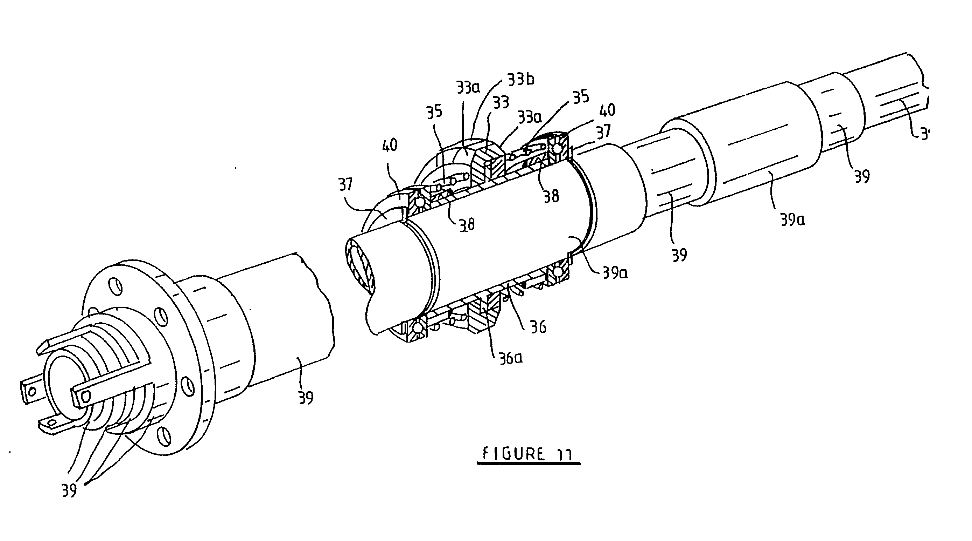

Movement of the shuttle may be performed by the tubular push/pull selector rod 39 which is shown in Figure 6 and Figure 9 and which could be actuated manually, hydraulically, pneumatically, electro-mechanically, etc. Where a plurality of shuttles 33 are housed within a shaft as shown in Figure 1, it is envisaged that each shuttle 33 will be coupled to its own tubular push/pull rod 39 and these could for example be arranged concentrically as shown in Figure 11. With such an arrangement each push/pull rod 39 will terminate in a mounting formation 39a, Figure 11 on which the tubular guide 36 of the shuttle 33 is adapted to be rotatably mounted. It will be appreciated that alternative arrangements will be possible. For example the shuttle could be operated from outside the shaft as shown at 22 in Figure 1. With such an arrangement a plurality of pin elements 23 will project radially outwardly from the shuttle 21 and pass through longitudinally elongated slots 24 in the hollow shaft. With this arrangement, a thrust bearing 25 will be provided to engage the pins 23 and the thrust bearing 25 will in turn be operated by means of a suitable shifting fork 26 so that longitudinal movement of the thrust bearing 25 by means of the shifting fork 26 will cause movement of the pin elements 23 and thus longitudinal movement of the shuttle.

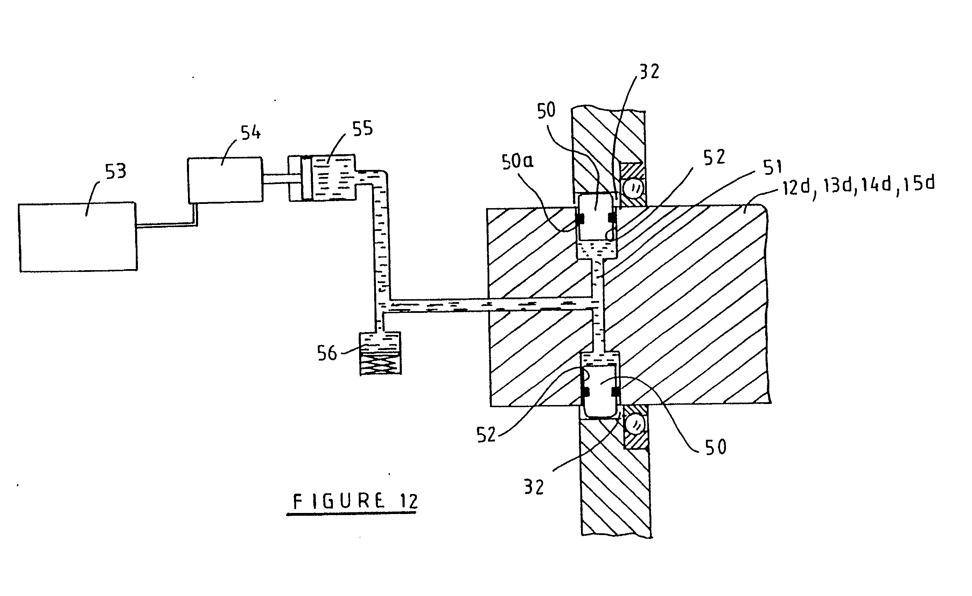

In an alternative arrangement shown in Figure 12 movement of the engagement elements shown at 50 can be effected by means of a working fluid, preferably a hydraulic fluid. Such an arrangement is shown schematically in Figure 12 and comprises a pressure chamber 51 which communicates with the radial apertures 52 in the shaft, and which is pressurised by working fluid in order to urge the engagement elements 50 outwardly to engage within the recess 32 in the hub 12b, 13b, 14b, 15b. For disengagement purposes, sufficient working fluid will be withdrawn from the chamber 51 to permit the engagement elements 50 to be retracted into the shaft 12d, 13d, 14d, 15d. As previously described the shoulders 32a of the recesses 32 could be shaped in such a way as to exert a net radially inwardly directed force on the engagement elements 50 so that when working fluid is withdrawn from the chamber 51, the hydraulic suction effect could be supplemented by such force to urge the engagement elements 50 radially inwardly. In addition, biasing means in the form of a spring or the like, not shown, could be employed to effect retraction of the engagement elements 50. It will be appreciated that when the engagement element 50 is in the form of a pin, a suitable seal 50a in the form of an O-ring or the like, could be provided in a peripheral recess on the pin, or the aperture in the shaft 52.

The system shown schematically in Figure 12 further includes a reservoir 53 for working fluid, an actuator 54 adapted to act on a positive displacement pump 55 to pump working fluid into the chamber 51 or to withdraw fluid therefrom, and a surge tank shown at 56.

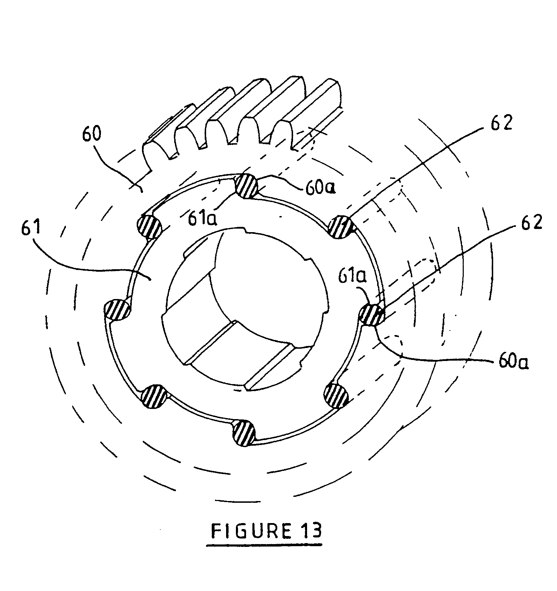

For example the invention envisages that resilient dampening means could be provided between the shaft 12d, 13d, 14d 15d and the hub 12b, 13b, 14b 15b to act as shock reducing means during the process of coupling the shaft to the hub. In one arrangement in accordance with the invention, the hub will be formed of an inner and an outer sleeve 60 and 61 respectively, Figure 13, with inserts or pads 62 of resilient material being provided between the adjacent surfaces of the sleeves for shock reducing purposes. In the arrangement shown in Figure 13, the adjacent surfaces of the sleeves 60, 61 define opposed abutment surfaces 60a and 61a and the aforesaid resilient inserts 62 are disposed between these abutment surfaces 60a and 61a to absorb shock loads. In an alternative arrangement, the elongated recess 32 in the hub 12b, 13b, 14b, 15b, could be provided with inserts of resilient material at the shoulder zones 32a thereof. In yet a further alternative, the entire recess zone 32 could be of such resilient material and in this case also the hub could be formed of an inner sleeve of resilient material defining the recess 32 and an outer sleeve coupled to the inner sleeve.

Doubtless other variations in detail of the invention are possible without departing from the principles set out in the consistory clauses. For example in the place of the roller elements 30 balls, or pin elements could be utilized particularly in cases where torque transmission is relatively small.

## Claims

1. Coupling means comprising a rotatable shaft, a rotatable hub on the shaft, locking means housed within the shaft and movable between a fully extended position wherein it projects generally radially outwardly from the shaft to engage in a recess in the hub to lock the shaft and the hub against relative rotational movement, and a retracted position wherein the locking means is withdrawn from the recess in the hub to permit relative rotation between the latter and the shaft, operating means within the shaft adapted on operation to urge the locking means towards the fully extended position, the arrangement being characterised in that the recess in the hub which is adapted to receive the locking means is elongated in the direction of rotation of the hub and profiled to permit the locking means to reach its fully extended position at any position along a substantial length of the recess.

2. The coupling means according to claim 1 wherein the recess in the hub is shaped so that the locking means is able to reach its fully extended position at any position along the length of the recess.

3. Coupling means according to claim 1 or claim 2 wherein two or more recesses are provided each recess defining a leading end and a trailing end, and two or more spaced locking means are provided each adapted to protrude into at least one recess, the spacing between the locking means being such that one locking means, when engaged, will be disposed at the leading end of one recess while another locking means will be disposed at a trailing end of the same or a different recess.

4. Coupling means according to any one of claims 1 to 3 wherein two spaced locking means are adapted to protrude into the recess in the hub, and the spacing between the locking means approximates the length of the recess so that a locking means will be disposed towards each extremity of the recess.

5. Coupling means according to any one of claims 1 to 4 wherein the operating means is in the nature of a mechanical shuttle disposed within an axial bore in the shaft and movable longitudinally relative therein, the shuttle defining a cam-like profile which is adapted to engage the locking means directly, or indirectly through a follower or the like, to urge the locking means towards its fully extended position.

6. Coupling means according to claim 3 or claim 4 wherein the operating means is in the nature of a mechanical shuttle disposed within an axial bore in the shaft and movable longitudinally relative therein, the shuttle defining a cam-like profile which is adapted to engage the locking means directly, or indirectly through a follower or the like, to urge the locking means towards its fully extended position, and the shuttle is adapted to act independently on each locking means of a pair of locking means so that the locking means will operate in sequence with one locking means first moving to its fully extended position and thereafter the other locking means will move to its fully extended position.

7. Coupling means according to claim 6 wherein the shuttle comprises two segments biased towards one another by a biasing means, so that when one segment is moved longitudinally within the bore of the shaft towards a position wherein it engages a locking means, the biasing means will act to urge the other segment towards a position wherein it engages another locking means.

8. Coupling means according to claim 7 wherein the segments are mounted for longitudinal movement on an axial guide and disposed one to either side of an abutment on the guide and biased from opposed sides towards the abutment, so that axial movement of the guide in one direction, will cause positive movement of one segment and spring-loaded movement of the other segment, and vice-versa for movement of the axial guide in the opposite direction.

9. Coupling means according to any one of claims 1 to 4 wherein the operating means is a fluid system comprising a pressure chamber within the shaft communicating with the locking means so that upon pressurisation of the chamber by a working fluid, the locking means is moved to its fully extended position and upon a reduction of pressure in the chamber, the locking means moves to the retracted position.

10. The coupling means according to claim 9 wherein the locking means includes or defines a piston member which is movable in a cylinder defined in the shaft under the influence of the working fluid in the chamber.

11. Coupling means according to any one of claims 1 to 10 wherein the locking means is a pin element movable in a mating radial aperture defined in the shaft.

12. Coupling means according to claim 11 wherein the pin element is of a oval cross-section defining a major axis and a minor axis at right angles to one another, the major axis of the oval section being disposed in a direction substantially parallel to the longitudinal axis of the shaft.

13. Coupling means according to any one of claims 1 to 10 wherein the locking means is a ball or roller which is movable between a retracted position wherein it is disposed within a radial aperture in the wall of the shaft and a fully extended position wherein it projects from the outer surface of the shaft to be disposed between a hub contact surface at one end of the recess in the hub, and a shaft contact surface in the radial aperture in the shaft, the aforesaid contact surfaces being generally opposed.

14. Coupling means according to claim 13 wherein the angles of the hub contact surface and the shaft contact surface will be such that there is a net force acting on the roller which urges the roller towards its retracted position.

15. Coupling means according to any one of claims 1 to 14 wherein resilient shock reducing means is provided by the hub to reduce shock during the process of coupling the shaft to the hub.

16. Coupling means according to claim 15 wherein the hub is formed of an inner and outer sleeve defining adjacent opposed abutment surfaces and resilient inserts or pads are provided between the opposed surfaces to serve a shock reducing function when the inner and outer sleeve perform relative angular movement to move the opposed abutment surfaces towards one another.

17. Coupling means according to claim 15 wherein the recess in the hub defines a leading extremity and a trailing extremity, and one or both such extremities are at least partially formed of a resilient shock reducing material.

18. Coupling means according to claim 17 wherein the recess in the hub is defined in an insert in the hub and the insert is of a resilient shock reducing material.

19. Coupling means according to claim 18 wherein the hub includes an outer sleeve and an inner sleeve of resilient shock reducing material coupled to one another, with the recess in the hub being formed in the inner sleeve.

20. Coupling means substantially as herein described with reference to the accompanying drawings.

21. A hub adapted for use in the coupling means claimed in any one of claims 1 to 20 defining an axial bore therein, and a recess in the surface of the bore, adapted to receive a locking means therein when the latter is in a fully extended position, characterised in that the recess is elongated in the direction of rotation of the hub in use, and profiled to permit the locking means to reach its fully extended position at any position along a substantial length of the recess.

22. The hub according to claim 21 wherein the recess is shaped so that the locking means is able to reach its fully extended position at any position along the length of the recess.

23. The hub according to claim 21 or claim 22 wherein the hub includes resilient shock reducing means to reduce shock when the hub is coupled to a shaft by the locking means.

24. The hub according to any one of claims 21 to 23 wherein the hub is formed of an inner and an outer sleeve defining adjacent opposed abutment surfaces, and resilient inserts or pads are provided between the opposed surfaces to serve a shock reducing function when the inner and outer sleeves perform relative angular movement to move the opposed abutment surface towards one another.

25. The hub according to any one of claims 21 to 23 wherein the recess in the hub defines a leading extremity and a trailing extremity, and one or both such extremites is at least partially formed of a resilient shock reducing material.

26. The hub according to any one of claims 21 to 23 or 25 wherein the recess in the hub is defined in an insert in the hub, and such insert is of a resilient shock reducing material.

27. The hub according to any one of claims 21 to 23 or 25 wherein the hub includes an outer sleeve and an inner sleeve of resilient shock reducing material coupled to one another, with the recess of the hub being formed in the inner sleeve.

28. A hub adapted for use in the coupling means claimed in any one of claims 1 to 20 substantially as herein described with reference to the accompanying drawings.

29. A shaft adapted for use in the coupling means claimed in any one of claims 1 to 20 characterised in one or more apertures therein adapted to mate with locking pins, characterised in that the apertures are of an oval shape defining a major axis and a minor axis at right angles to one another, the major axis of the oval shape being disposed in a direction substantially parallel to the longitudinal axis of the shaft.

30. A shaft adapted for use in the coupling means claimed in any one of claims 1 to 20 substantially as herein described with reference to the accompanying drawings.

31. Operating means adapted for use in the coupling means claimed in any one of claims 1 to 20 comprising a mechanical shuttle adapted to be disposed within the bore of a shaft and to be movable longitudinally therein, the shuttle defining a cam-like profile which is adapted to engage locking means directly, or indirectly through a follower or the like, to urge the locking means towards an extended position.

32. Operating means according to claim 31 wherein the shuttle is adapted to engage two locking means to urge such locking means towards their fully extended positions, and the shuttle acts independently on each locking means so that the locking means will operate in sequence with one of the locking means first moving to its extended position and thereafter the other locking means moves to its fully extended position.

33. Operating means according to claim 32 wherein the shuttle comprises two segments biased towards one another by a biasing means, so that when one segment is moved longitudinally within the bore of the shaft towards a position wherein it engages a locking means, the biasing means will act to urge the other segment towards a position wherein it engages the other locking means.

34. The operating means according to claim 33 wherein the segments are mounted for longitudinal movement on an axial guide and disposed one to either side of an abutment on the guide and biased from opposed sides towards the abutment so that axial movement of the guide in one direction will cause positive movement of the one segment and spring loaded movement of the other segment, and vice-versa for movement of the axial guide in the opposite direction.

35. Operating means adapted for use in the coupling means claimed in any one of claims 1 to 20 comprising a pressure chamber within a shaft communicating with locking means so that upon pressurization of the shaft by a working fluid, the locking means is moved to an extended position and upon reduction of pressure in the chamber the locking means moves to a retracted position.

36. Operating means according to claim 35 wherein the locking means defines a piston member which is movable, in a cylinder defined in the shaft, under the influence of the working fluid in the chamber.

37. Operating means adapted for use in the coupling means claimed in any one of claims 1 to 20 substantially as herein described with reference to the accompanying drawings.

38. A gearbox assembly including the coupling means claimed in any one of claims 1 to 20.

39. A gear box assembly substantially as herein described with reference to the accompanying drawiings.

FIGURE 1

FIGURE 3

FIGURE 2

FIGURE 5

FIGURE 4

FIGURE 6

FIGURE 7

FIGURE 8

FIGURE 9

FIGURE 10

FIGURE 11

12d, 13d, 14d, 15d

FIGURE 12

FIGURE 13